# EUROPÄISCHE PATENTANMELDUNG

(11) **EP 4 840 279 A1**
(43) Veröffentlichungstag der Anmeldung: **18.11.2026**
(21) Anmeldenummer: 26174161.5
(22) Anmeldetag: 23.04.2026
(51) Int. Cl.: A01C 7/08, A01C 7/10

(54) **VERFAHREN ZUR STEUERUNG DER FÖRDERGUTMENGE EINER SÄMASCHINE MIT EINEM VERSCHIEBEFAHRGASSENSYSTEM ZUM ANLEGEN VON SAATREIHEN AUF EINEM FELD**

(30) Priorität: 14.05.2025 DE 102025118605
(71) Anmelder: Amazonen-Werke H. Dreyer SE & Co. KG, 49205 Hasbergen (DE)
(72) Erfinder: Mertens, Daniel, 49205 Hasbergen (DE); Wessels, Mario, 49205 Hasbergen (DE)

(57) **Zusammenfassung**

Die Erfindung betrifft ein Verfahren zur Steuerung der Fördergutmenge einer Sämaschine (1) mit einem Verschiebefahrgassensystem (2) zum Anlegen von Saatreihen (A-J) auf einem Feld. Ferner betrifft die Erfindung einen Computer, ein Computersystem oder ein Computernetzwerk, ein Computerprogramm sowie eine Sämaschine (1) zum Ausbringen von körnigem Fördergut in einen Feldboden.

## Beschreibung

Die Erfindung betrifft ein Verfahren zur Steuerung der Fördergutmenge einer Sämaschine mit einem Verschiebefahrgassensystem zum Anlegen von Saatreihen auf einem Feld. Ferner betrifft die Erfindung einen Computer, ein Computersystem oder ein Computernetzwerk, ein Computerprogramm sowie eine Sämaschine zum Ausbringen von körnigem Fördergut in einen Feldboden.

Bekanntermaßen werden Räder einer Sämaschine so für eine Feldüberfahrt auseinander- oder zusammenteleskopiert, dass die Räder zwischen den anzulegenden Saatreihen verlaufen, wodurch eine Verdichtung unter den Saatreihen vermeidbar ist.

Ferner ist es bekannt, dass mit einer weiteren landwirtschaftlichen Arbeitsmaschine auf einem Feld beispielsweise Gülle ausbringbar ist. Eine derartige Arbeitsmaschine hat breitere Reifen und/oder eine andere Spurweite als die zuvor verwendete Sämaschine.

Um nun mit der Gülle bzw. mit der weiteren landwirtschaftlichen Arbeitsmaschine in den entstandenen Nutzpflanzenbestand fahren zu können, müssen verschiedene Vereinzelungsaggregate der Sämaschine, die zum Ausbringen von Fördergut dienen, beim Säen abgeschaltet werden, um ebendiese nachher nicht zu überfahren.

Dadurch entstehen relativ große ungenutzte Bereiche, die nicht zum Ertrag beitragen. Ebenfalls wird der Wuchs von Unkraut und die Bodenerosion befördert.

Vor diesem Hintergrund ist es Aufgabe der vorliegenden Erfindung, ein Verfahren zur Steuerung der Fördergutmenge einer Sämaschine mit einem Verschiebefahrgassensystem zum Anlegen von Saatreihen auf einem Feld, welches den Wuchs von Unkraut und die Bodenerosion verringert und/oder den Ernteertrag steigert.

Diese Aufgabe wird durch die Merkmale der unabhängigen Ansprüche gelöst. Weitere vorteilhafte Weiterbildungen sind Gegenstand der Unteransprüche.

Ein erster Aspekt der vorliegenden Erfindung umfasst ein Verfahren zur Steuerung der Fördergutmenge einer Sämaschine, wie z. B. einer Einzelkorn-Sämaschine, mit einem Verschiebefahrgassensystem zum Anlegen von Saatreihen auf einem Feld.

Dabei kann das Verfahren vor dem Ausbringen von körnigem Fördergut oder vor einem Säen, z. B. durch die Sämaschine, als einen Verfahrensschritt ein Festlegen oder Erfassen einer Sollmenge oder Fördergutmenge pro Hektar für das auszubringende körnige Fördergut umfassen.

Unter einem körnigen Fördergut kann in der vorliegenden Beschreibung Saatgut, Dünger, usw. verstanden werden.

Das Festlegen oder Erfassen kann eine Eingabe eines Nutzers für die Sollmenge oder Fördergutmenge pro Hektar für das auszubringende körnige Fördergut umfassen.

Zudem kann das Verfahren als weiteren Schritt ein Aufteilen der Sollmenge oder Fördergutmenge pro Hektar auf vorhandene Vereinzelungsaggregate einer Sämaschine für Fördergut, mit welcher körniges Fördergut ausbringbar ist, aufweisen.

Des Weiteren weist das Verfahren vor dem Ausbringen von körnigem Fördergut oder vor einem Säen, als Verfahrensschritt ein Anlegen oder Planen wenigstens einer Pflegefahrgasse für eine Spurweite, Reifenbreite und/oder Pflegearbeitsbreite einer landwirtschaftlichen Arbeitsmaschine zur Feldbearbeitung nach einem Ausbringen von körnigem Fördergut oder nach einem Säen auf. Dabei kann das Anlegen oder Planen eine Eingabe eines Nutzers für eine Spurweite, Reifenbreite und/oder Pflegearbeitsbreite einer landwirtschaftlichen Arbeitsmaschine zur Feldbearbeitung nach einem Ausbringen von körnigem Fördergut oder nach einem Säen umfassen.

Als weiteren Verfahrensschritt weist das Verfahren ein Verschieben mindestens einer zu erstellenden Saatreihe aus der wenigstens einen anzulegenden Pflegefahrgasse und/oder quer zur Fahrtrichtung einer Sämaschine auf, um mindestens eine verschobene Saatreihe zu erhalten. Das Verschieben kann mithilfe eines Verschiebefahrgassensystems einer Sämaschine unternommen werden. Hierbei kann das Verschiebefahrgassensystem mindestens ein Vereinzelungsaggregat für Fördergut und/oder mindestens ein Düngerschar einer Sämaschine verschieben oder verfahren. Mithilfe der Pflegefahrgasse wird also dort, wo eine landwirtschaftliche Arbeitsmaschine zur Feldbearbeitung nach einem Ausbringen von körnigem Fördergut oder nach einem Säen fahren wird, das Wachsen von Nutzpflanzen durch Vermeiden des Ausbringens von körnigem Fördergut unterbunden.

Außerdem kann beim Verschieben mindestens ein Vereinzelungsaggregat für Fördergut und/oder mindestens ein Düngerschar einer Sämaschine mit einem Verschiebefahrgassensystem, z. B. quer zur Fahrtrichtung einer Sämaschine, vom Verschiebefahrgassensystem einer Sämaschine verschoben oder verfahren werden, um die wenigstens eine Pflegefahrgasse zu realisieren.

Ferner weist das Verfahren ein Verändern der Saatgutstärke oder der Fördergutmenge der mindestens einen verschobenen Saatreihe auf. Auf diese Weise kann beispielsweise der geringere Abstand zwischen zwei Pflanzenreihen bei der Fördergutmenge berücksichtigt werden. Somit kann der Wuchs von Unkraut und die Bodenerosion verringert und/oder den Ernteertrag gesteigert werden.

Das Verändern wird automatisch durchgeführt. Somit kann ein Anwender oder der Landwirt entlastet werden und die Fehleranfälligkeit durch manuelles Verändern reduziert aber auch die Fördergutmenge während des Ausbringens von Fördergutmenge optimal angepasst werden.

Des Weiteren kann beim Verändern der Fördergutmenge die Sollmenge oder die Fördergutmenge pro Hektar, z. B. über alle Saatreihen, die erstellt werden, gleichbleiben oder unverändert bleiben. Alternativ oder zusätzlich kann beim Verändern der Fördergutmenge der Abstand zwischen zwei Körnern des Förderguts entlang der mindestens einen verschobenen Saatreihe größer oder kleiner sein, als zwischen zwei Körnern des Förderguts entlang mindestens einer unverschobenen, zu erstellenden Saatreihe, deren Lage unverändert sein kann.

Ferner kann das Verändern eine Erhöhung oder Verminderung der Fördergutmenge für die mindestens eine verschobene Saatreihe umfassen. Alternativ oder zusätzlich kann beim Verändern der Fördergutmenge der mindestens einen verschobenen Saatreihe eine im Vergleich zu der mindestens einen benachbarten und unverschobenen, zu erstellenden Saatreihe größere Fördergutmenge zugewiesen werden, da deren zu erwartende Nutzpflanzen zumindest an einer Seite mehr Standraum auf dem Feld zur Verfügung haben. Alternativ kann beim Verändern der Fördergutmenge der mindestens einen verschobenen Saatreihe eine im Vergleich zu der mindestens einen unverschobenen und benachbarten, zu erstellenden Saatreihe kleinere Fördergutmenge zugewiesen werden, da deren zu erwartende Nutzpflanzen zumindest an einer Seite weniger Standraum zur Verfügung haben.

Des Weiteren kann das Verfahren als einen Schritt ein Verändern der Fördergutmenge mindestens einer unverschobenen, benachbarten Saatreihe aufweisen, von der die mindestens verschobene Saatreihe weg verschoben wurde.

Dabei kann das Verändern eine Erhöhung oder Verminderung der Fördergutmenge für die mindestens eine unverschobene, benachbarte Saatreihe umfassen, von der die mindestens eine zu erstellende Saatreihe weg verschoben wurde. Alternativ oder zusätzlich kann beim Verändern der Fördergutmenge der mindestens einen unverschobenen, benachbarten Saatreihe, von der die mindestens eine verschobene Saatreihe weg verschoben wurde, eine im Vergleich zu der mindestens einen verschobenen Saatreihe und/oder eine im Vergleich zu der mindestens einen unverschobenen, benachbarten Saatreihe, zu der die mindestens eine verschobene Saatreihe hin verschoben wurde, größere Fördergutmenge zugewiesen werden, da deren zu erwartende Nutzpflanzen an einer Seite mehr Standraum zur Verfügung haben.

Des Weiteren kann das Verfahren als einen Schritt ein Verändern der Fördergutmenge mindestens einer unverschobenen, benachbarten Saatreihe aufweisen, zu der die mindestens eine verschobene Saatreihe hin verschoben wurde.

Zudem kann das Verändern eine Erhöhung oder Verminderung der Fördergutmenge für die mindestens eine unverschobene, benachbarte Saatreihe umfassen, zu der die mindestens eine verschobene Saatreihe hin verschoben wurde. Alternativ oder zusätzlich kann beim Verändern der Fördergutmenge der mindestens einen unverschobenen, benachbarten Saatreihe, zu der die mindestens eine verschobene Saatreihe hin verschoben wurde, eine im Vergleich zu der mindestens einen unverschobene, benachbarten Saatreihe, von der die mindestens eine verschobene Saatreihe weg verschoben wurde, und/oder eine im Vergleich zu der mindestens einen verschobenen Saatreihe geringere Fördergutmenge zugewiesen werden, da deren zu erwartende Nutzpflanzen weniger Standraum zu Verfügung haben.

Alle oben vorgestellten Merkmale dienen der Verringerung des Wuchses von Unkraut und der Bodenerosion und/oder der Steigerung des Ernteertrags.

Ein zweiter Aspekt der vorliegenden Erfindung umfasst einen Computer, ein Computersystem oder ein Computernetzwerk.

Es wird ausdrücklich darauf hingewiesen, dass die Merkmale des Verfahrens, wie sie unter dem ersten Aspekt erwähnt werden, einzeln oder miteinander kombinierbar bei dem Computer, dem Computersystem oder dem Computernetzwerk Anwendung finden können.

Ein Computer, ein Computersystem oder ein Computernetzwerk sind dazu eingerichtet, lokal oder nicht-lokal das Verfahren nach dem ersten Aspekt auszuführen.

Ein dritter Aspekt der vorliegenden Erfindung umfasst ein Computerprogramm.

Es wird ausdrücklich darauf hingewiesen, dass die Merkmale des Verfahrens, wie sie unter dem ersten Aspekt erwähnt werden, einzeln oder miteinander kombinierbar bei dem Computerprogramm Anwendung finden können.

Ein Computerprogramm umfasst Befehle, die bei der Ausführung des Programms durch einen Computer diesen veranlassen, das Verfahren nach dem ersten Aspekt auszuführen.

Ein vierter Aspekt der vorliegenden Erfindung umfasst eine Sämaschine zum Ausbringen von körnigem Fördergut in einen Feldboden.

Es wird ausdrücklich darauf hingewiesen, dass die Merkmale des Verfahrens, wie sie unter dem ersten Aspekt erwähnt werden, und/oder die Merkmale des Computers, des Computersystems oder des Computernetzwerkes einzeln oder miteinander kombinierbar bei der Sämaschine Anwendung finden können.

Eine Sämaschine zum Ausbringen von körnigem Fördergut in einen Feldboden umfasst einen Computer, ein Computersystem oder ein Computernetzwerk nach dem zweiten Aspekt.

Alternativ umfasst eine Sämaschine zum Ausbringen von körnigem Fördergut in einen Feldboden ein Verschiebefahrgassensystem zum Verschieben mindestens eines

Vereinzelungsaggregat und/oder mindestens eines Düngerschars, mindestens ein Vereinzelungsaggregat für Fördergut und/oder mindestens ein Düngerschar.

Ferner umfasst die Sämaschine eine Regelungseinrichtung zum Regeln des Verschiebefahrgassensystems, wobei die Regelungseinrichtung einen Computer, ein Computersystem oder ein Computernetzwerk nach dem zweiten Aspekt aufweist.

Nachstehend wird die Erfindung anhand eines Ausführungsbeispiels in Verbindung mit zugehörigen Zeichnungen näher erläutert. Hierbei zeigen schematisch:
- **Fig. 1**: eine Draufsicht auf eine Sämaschine mit einem ersten Ablageschema für Saatreihen mit einem gleichmäßigen Abstand zwischen den Saatreihen zueinander; und
- **Fig. 2**: eine Draufsicht auf ein zweites Ablageschema von Saatreihen mit verändertem Abstand zwischen den Saatreihen zueinander.

In der nachfolgenden Beschreibung werden gleiche Bezugszeichen für gleiche Gegenstände verwendet.

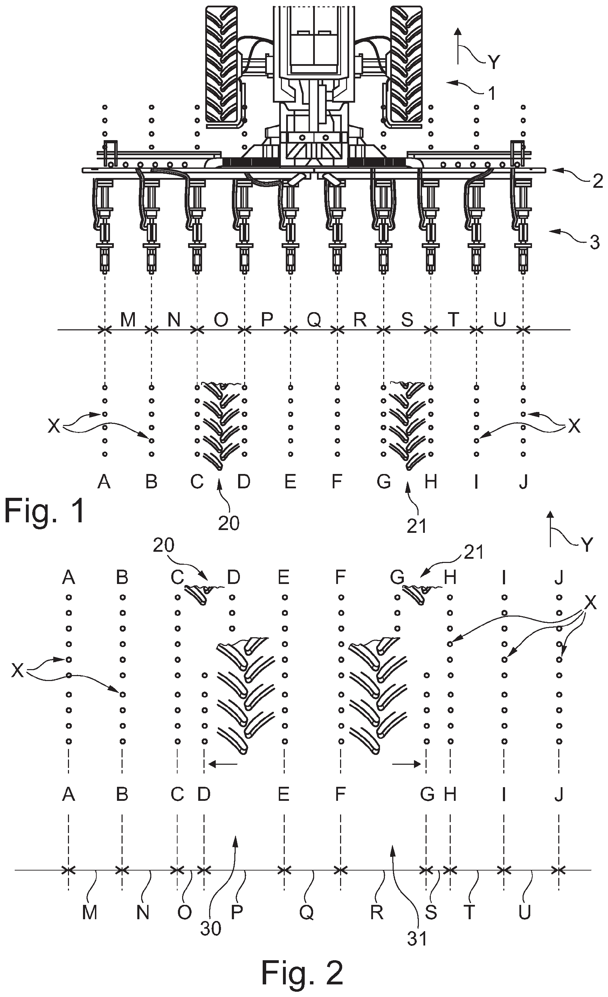

Figur 1 zeigt eine Draufsicht auf eine Sämaschine 1 mit einem ersten Ablageschema für Saatreihen A-J mit einem gleichmäßigen Abstand M-U zwischen den Saatreihen A-J zueinander.

Demgegenüber zeigt Figur 2 eine Draufsicht auf ein zweites Ablageschema von Saatreihen A-J mit verändertem Abstand M-U zwischen den Saatreihen A-J zueinander.

Der Einfachheit halber werden nachstehend die Figuren 1 und 2 gemeinsam beschrieben.

So zeigen Figuren 1 und 2 eine Sämaschine 1 zum Ausbringen von körnigem Fördergut in einen Feldboden.

Die Sämaschine umfasst ein Verschiebefahrgassensystem 2 zum Verschieben von Vereinzelungsaggregaten 3 und mehrere Vereinzelungsaggregate 3 für Fördergut X.

Zudem umfasst die Sämaschine 1 eine Regelungseinrichtung (nicht dargestellt) zum Regeln des Verschiebefahrgassensystems 2, wobei die Regelungseinrichtung einen Computer aufweist. Dabei ist der Computer dazu eingerichtet, lokal oder nicht-lokal nachstehend geschildertes Verfahren zur Steuerung der Fördergutmenge der Sämaschine 1 mit dem Verschiebefahrgassensystem 2 zum Anlegen von Saatreihen A-J auf einem Feld auszuführen.

Das Verfahren umfasst als Verfahrensschritt vor dem Ausbringen von körnigem Fördergut X bzw. vor einem Säen durch die Sämaschine 1 ein Festlegen oder Erfassen einer Sollmenge oder einer Fördergutmenge pro Hektar für das auszubringende körnige Fördergut X. Dabei kann das Festlegen oder Erfassen eine Eingabe eines Nutzers für die Sollmenge oder Fördergutmenge pro Hektar für das auszubringende körnige Fördergut X aufweisen.

Hieraufhin schließt sich ein Aufteilen der Sollmenge oder Fördergutmenge pro Hektar auf vorhandene Vereinzelungsaggregate 3 der Sämaschine 1 für Fördergut X an, mit welchen körniges Fördergut X ausbringbar ist.

Vor dem Ausbringen von körnigem Fördergut X bzw. vor einem Säen, werden - vgl. Figur 2 - zwei Pflegefahrgassen 30, 31 für eine Spurweite, Reifenbreite und/oder Pflegearbeitsbreite einer landwirtschaftlichen Arbeitsmaschine zur Feldbearbeitung nach dem Ausbringen von körnigem Fördergut X bzw. nach einem Säen angelegt bzw. geplant.

Hierbei zeigen Figuren 1 und 2 zur Verdeutlichung den Unterschied zwischen einem Ausbringen ohne gesonderte Pflegefahrgassen 30, 31, aber mit Fahrgassen 20, 21 der Sämaschine 1, und einem Ausbringen mit angelegten Pflegefahrgassen 30, 31 (vgl. Figur 2) und aufgelösten Fahrgassen 20, 21.

Der Schritt des Anlegens oder Planens umfasst eine Eingabe eines Nutzers für eine Spurweite, Reifenbreite und/oder Pflegearbeitsbreite einer landwirtschaftlichen Arbeitsmaschine zur Feldbearbeitung nach dem Ausbringen von körnigem Fördergut X bzw. nach einem Säen.

Daraufhin schließt sich als weiterer Verfahrensschritt ein Verschieben zweier zu erstellender Saatreihen D, G aus der entsprechenden anzulegenden Pflegefahrgasse 30, 31 und quer zur Fahrtrichtung Y der Sämaschine 1 an (vgl. Figur 2), um die verschobenen Saatreihen D, G zu erhalten.

Beim Verschieben werden die Vereinzelungsaggregate 3 für Fördergut X quer zur Fahrtrichtung Y der Sämaschine 1 vom Verschiebefahrgassensystem 2 der Sämaschine 1 verschoben bzw. verfahren, um die Pflegefahrgassen 30, 31 zu realisieren.

Anschließend umfasst das Verfahren als Schritt ein Verändern der Fördergutmenge der verschobenen Saatreihen D, G, wobei das Verändern automatisch durchgeführt wird.

Beim Verändern ist der Abstand zwischen zwei Körnern des Förderguts X entlang der verschobenen Saatreihen D, G kleiner, als zwischen zwei Körnern des Förderguts X entlang der unverschobenen, zu erstellenden Saatreihen A-C; E, F, H-J.

Somit umfasst das Verändern eine Erhöhung der Fördergutmenge für die verschobenen Saatreihen D, G. Anders ausgedrückt, wird beim Verändern der Fördergutmenge der verschobenen Saatreihen D, G eine im Vergleich zu den benachbarten und unverschobenen, zu erstellenden Saatreihen A-C, E, F, G-J größere Fördergutmenge zugewiesen, da deren zu erwartende Nutzpflanzen zumindest an einer Seite mehr Standraum auf dem Feld zur Verfügung haben.

Im vorliegenden Beispiel umfasst das Verfahren ferner ein Verändern der Fördergutmenge der unverschobenen, benachbarten Saatreihen E, F, von denen die verschobenen Saatreihen D, G weg verschoben wurden.

Dabei umfasst das Verändern eine Erhöhung der Fördergutmenge für die unverschobenen, benachbarten Saatreihen E, F, von denen die verschobenen Saatreihen D, G weg verschoben wurden. Anders ausgedrückt, wird beim Verändern der Fördergutmenge der unverschobenen, benachbarten Saatreihen E, F, von denen die zu verschobenen Saatreihen D, G weg verschoben wurden, eine im Vergleich zu den verschobenen Saatreihen D, G größere Fördergutmenge zugewiesen, da deren zu erwartende Nutzpflanzen an einer Seite mehr Standraum zur Verfügung haben.

Zudem umfasst das Verfahren ein Verändern der Fördergutmenge der unverschobenen, benachbarten Saatreihen C, H, zu denen die verschobenen Saatreihen D, G hin verschoben wurden.

Das Verändern umfasst dabei eine Verminderung der Fördergutmenge für die unverschobenen, benachbarten Saatreihen C, H, zu denen die verschobenen Saatreihen D, G hin verschoben wurden. Mit anderen Worten ausgedrückt, wird beim Verändern der Fördergutmenge der unverschobenen, benachbarten Saatreihen C, H, zu denen die verschobenen Saatreihen D, G hin verschoben wurden, eine im Vergleich zu den verschobenen Saatreihen D, G, geringere Fördergutmenge zugewiesen, da deren zu erwartende Nutzpflanzen weniger Standraum zu Verfügung haben.

Durch die Variation der Fördergutmenge den Saatreihen C, D, E, F, G, H kann der Ertrag trotz relativ breiten Pflegefahrgassen 30, 31 im Vergleich zu einer Ablage nach Figur 1 konstant gehalten oder gesteigert werden.

### Bezugszeichenliste

- 1: Sämaschine
- 2: Verschiebefahrgassensystem
- 3: Vereinzelungsaggregat

- 20: Fahrgasse
- 21: Fahrgasse

- 30: Pflegefahrgasse
- 31: Pflegefahrgasse

- A-J: Saatreihen

- X: Fördergut
- Y: Fahrtrichtung

## Patentansprüche

1. Verfahren zur Steuerung der Fördergutmenge einer Sämaschine (1) mit einem Verschiebefahrgassensystem (2) zum Anlegen von Saatreihen (A-J) auf einem Feld aufweisend:
- vor dem Ausbringen von körnigem Fördergut (X), Anlegen wenigstens einer Pflegefahrgasse (30, 31) für eine Spurweite, Reifenbreite und/oder Pflegearbeitsbreite einer landwirtschaftlichen Arbeitsmaschine zur Feldbearbeitung nach einem Ausbringen von körnigem Fördergut (X),
- Verschieben mindestens einer zu erstellenden Saatreihe (D, G) aus der wenigstens einen anzulegenden Pflegefahrgasse (30, 31) und/oder quer zur Fahrtrichtung (Y) einer Sämaschine (1), um mindestens eine verschobene Saatreihe (D, G) zu erhalten,
- Verändern der Fördergutmenge der mindestens einen verschobenen Saatreihe (D, G),
- wobei das Verändern automatisch durchgeführt wird.

2. Verfahren nach Anspruch 1,
- wobei beim Verändern der Fördergutmenge die Sollmenge oder die Fördergutmenge pro Hektar gleich oder unverändert bleibt,
und/oder
- wobei beim Verändern der Fördergutmenge der Abstand zwischen zwei Körnern des Förderguts (X) entlang der mindestens einen verschobenen Saatreihe (D, G) größer oder kleiner ist, als zwischen zwei Körnern des Förderguts (X) entlang mindestens einer unverschobenen, zu erstellenden Saatreihe (A-C; E, F, H-J).

3. Verfahren nach Anspruch 1 oder 2,
- wobei das Verändern eine Erhöhung oder Verminderung der Fördergutmenge für die mindestens eine verschobenen Saatreihe (D, G) umfasst,
und/oder
- wobei beim Verändern der Fördergutmenge der mindestens einen verschobenen Saatreihe (D, G) eine im Vergleich zu der mindestens einen benachbarten und unverschobenen, zu erstellenden Saatreihe (A-C, E, F, G-J) größere Fördergutmenge zugewiesen wird, da deren zu erwartende Nutzpflanzen zumindest an einer Seite mehr Standraum auf dem Feld zur Verfügung haben,
oder
- wobei beim Verändern der Fördergutmenge der mindestens einen verschobenen Saatreihe (D, G) eine im Vergleich zu der mindestens einen unverschobenen und benachbarten, zu erstellenden Saatreihe (A-C, E, F, G-J) kleinere Fördergutmenge zugewiesen wird, da deren zu erwartende Nutzpflanzen zumindest an einer Seite weniger Standraum zur Verfügung haben.

4. Verfahren nach einem der vorangehenden Ansprüche,
- ferner ein Verändern der Fördergutmenge mindestens einer unverschobenen, benachbarten Saatreihe (E, F) aufweisend, von der die mindestens eine verschobenen Saatreihe (D, G) weg verschoben wurde,
und/oder
- wobei das Verändern eine Erhöhung oder Verminderung der Fördergutmenge für die mindestens eine unverschobene, benachbarte Saatreihe (E, F) umfasst, von der die mindestens eine verschobene Saatreihe (D, G) weg verschoben wurde.

5. Verfahren nach einem der vorangehenden Ansprüche,
- ferner ein Verändern der Fördergutmenge mindestens einer unverschobenen, benachbarten Saatreihe (C, H) aufweisend, zu der die mindestens eine verschobene Saatreihe (D, G) hin verschoben wurde,
und/oder
- wobei das Verändern eine Erhöhung oder Verminderung der Fördergutmenge für die mindestens eine unverschobene, benachbarte Saatreihe (C, H) umfasst, zu der die mindestens eine verschobene Saatreihe (D, G) hin verschoben wurde.

6. Computer, Computersystem oder Computernetzwerk, welcher/welches dazu eingerichtet ist, lokal oder nicht-lokal das Verfahren nach einem der vorangehenden Ansprüche auszuführen.

7. Computerprogramm, umfassend Befehle, die bei der Ausführung des Programms durch einen Computer diesen veranlassen, das Verfahren nach einem der vorangehenden Ansprüche auszuführen.

8. Sämaschine (1) zum Ausbringen von körnigem Fördergut in einen Feldboden aufweisend:
- einen Computer, ein Computersystem oder ein Computernetzwerk nach Anspruch 6, oder
- ein Verschiebefahrgassensystem (2) zum Verschieben mindestens eines Vereinzelungsaggregat (3) und/oder mindestens eines Düngerschars, mindestens ein Vereinzelungsaggregat (3) für Fördergut und/oder mindestens ein Düngerschar, und
- eine Regelungseinrichtung zum Regeln des Verschiebefahrgassensystems (2), wobei die Regelungseinrichtung einen Computer, ein Computersystem oder ein Computernetzwerk nach Anspruch 6 aufweist.
